# EUROPEAN PATENT APPLICATION

(11) **EP 3 432 160 A1**
(43) Date of publication of application: **23.01.2019**
(21) Application number: 17765743.4
(22) Date of filing: 07.03.2017
(51) Int. Cl.: G06F 17/30, G06F 17/27

(54) **KEYWORD EXTRACTION METHOD AND DEVICE**

(30) Priority: 17.03.2016 CN 201610153177
(71) Applicant: Alibaba Group Holding Limited, Grand Cayman (KY)
(72) Inventor: ZHANG, Zengming, Hangzhou Zhejiang 311121 (CN)
(74) Representative: Finnegan Europe LLP
(86) International application number: PCT/CN2017/075832
(87) International publication number: WO 2017/157201

(57) **Abstract**

The present application provides a phrase extraction method and apparatus. The method includes: acquiring description information of a network resource; performing an explicit-phrase extraction procedure on the description information to extract an explicit phrase from the description information; and performing a mode-phrase extraction procedure on the description information to extract an implicit phrase from the description information. By using the technical solution of the present application, more high-quality phrases can be extracted.

## Description

The present application claims priority to Chinese Patent Application No. 201610153177.4, filed on March 17, 2016 and entitled "PHRASE EXTRACTION METHOD AND APPARATUS," which is incorporated herein by reference in its entirety.

### Technical Field

The present application relates to the field of data processing technologies, and in particular, to a phrase extraction method and apparatus.

### Background Art

With the development of Internet technologies, the amount of information that needs to be processed in information processing fields keeps growing. Phrase extraction is an indispensable operation in the information processing fields such as search engines, automatic word segmentation, dictionary compilation, and machine translation. The effect of phrase extraction significantly affects information processing effects in these information processing fields. Different linguistic styles are used in different fields, and therefore manners of phrase extraction are different.

For example, phrases that can describe commodity features are needed in the field of electronic commerce. For example, a piece of clothing may be described by using phrases such as "long-sleeve," "v-neck," "black," and "package-hip." Currently, phrases in the field of electronic commerce are manually determined by operation personnel based on experience. Because of limitation by knowledge of the operation personnel, phrases determined in such a manner are not comprehensive and the quality cannot be ensured.

### Summary of the Invention

A plurality of aspects of the present application provides a phrase extraction method and apparatus to extract more high-quality phrases.

According to an aspect of the present application, a phrase extraction method is provided, including:
acquiring description information of a network resource;
performing an explicit-phrase extraction procedure on the description information to extract an explicit phrase from the description information; and
performing a mode-phrase extraction procedure on the description information to extract an implicit phrase from the description information.

According to another aspect of the present application, a phrase extraction apparatus is provided, including:
an acquisition module configured to acquire description information of a network resource;
a first extraction module configured to perform an explicit-phrase extraction procedure on the description information to extract an explicit phrase from the description information; and
a second extraction module configured to perform a mode-phrase extraction procedure on the description information to extract an implicit phrase from the description information.

In the present application, description information of a network resource is used as a corpus required for phrase extraction, and an explicit-phrase extraction procedure and a mode-phrase extraction procedure are performed on the description information, so that an explicit phrase that can be easily discovered and an implicit phrase that cannot be easily discovered can be extracted from the description information, more comprehensive phrase extraction can be achieved, and phrase quality can be ensured.

### Brief Description of the Drawings

To describe the technical solutions in the embodiments of the present application more clearly, the following briefly introduces the accompanying drawings required for describing the embodiments or the prior art. Apparently, the accompanying drawings in the following description show some embodiments of the present application, and those of ordinary skill in the art may still derive other drawings from these accompanying drawings without creative efforts.
FIG. 1 is a schematic flowchart of a phrase extraction method according to an embodiment of the present application;
FIG. 2 is a schematic flowchart of a phrase extraction method according to another embodiment of the present application;
FIG. 3 is a schematic structural diagram of a phrase extraction apparatus according to still another embodiment of the present application; and
FIG. 4 is a schematic structural diagram of a phrase extraction apparatus according to still another embodiment of the present application.

### Detailed Description

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are merely some rather than all the embodiments of the present application. All other embodiments obtained by persons of ordinary skill in the art based on the embodiments of the present application without creative efforts shall fall within the protection scope of the present application.

Phrases that can describe commodity features need to be extracted in the field of electronic commerce. In the prior art, phrases are generally determined by operation personnel manually based on experience. Because of limitations by knowledge and subjectivity of the operation personnel, phrases determined in such a manner are not comprehensive and the quality cannot be ensured.

For the foregoing problem, the present application provides a phrase extraction method, and has a main principle as follows: Description information of a network resource is used as a corpus required for phrase extraction, so that an explicit phrase that can be easily discovered and an implicit phrase that cannot be easily discovered can be automatically extracted from the description information, more comprehensive phrase extraction can be achieved, and phrase quality can be ensured. Therefore, the existing problem in the prior art can be solved.

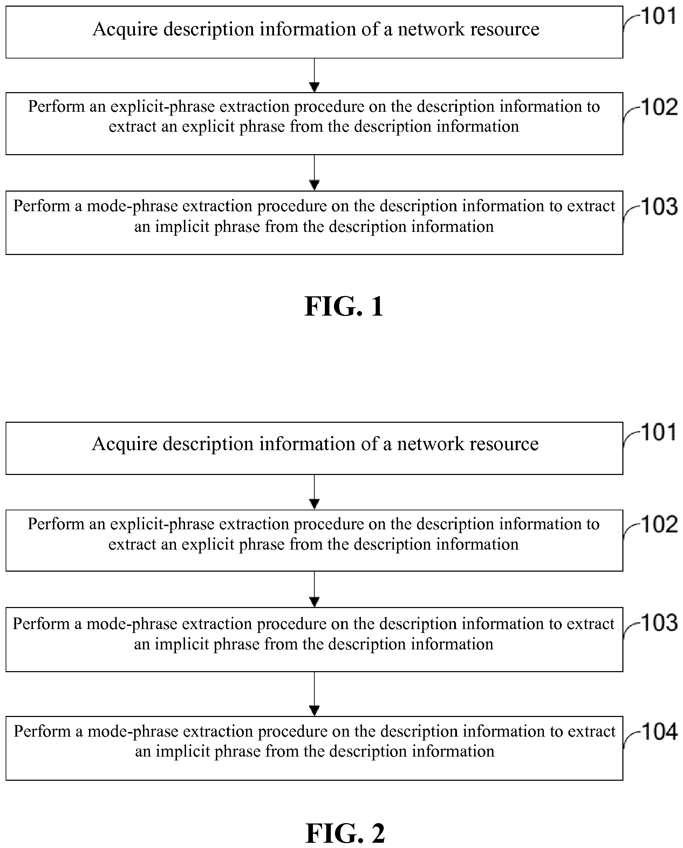

FIG. 1 is a schematic flowchart of a phrase extraction method according to an embodiment of the present application. As shown in FIG. 1, the method includes the following steps:
101: Description information of a network resource is acquired.
102: An explicit-phrase extraction procedure is performed on the description information to extract an explicit phrase from the description information.
103: A mode-phrase extraction procedure is performed on the description information to extract an implicit phrase from the description information.

The phrase extraction method provided in this embodiment may be performed by a phrase extraction apparatus, so that more comprehensive phrase extraction can be achieved, and phrase quality can be ensured.

Specifically, a first step of phrase extraction is: preparing an extraction corpus. In this embodiment, the description information of the network resource is acquired and used as the extraction corpus.

The description information of the network resource is mainly some information related to the network resource. For example, the description information may include, but is not limited to, at least one of a title, attribute information, keywords, detailed information, and comment information of the network resource. It should be noted that the description information of the network resource is preferably, but is not limited to, text information.

The attribute information of the network resource may be manually filled by a network resource provider during the release of the network resource. For example, the attribute information includes, but is not limited to, a length, a size, a place of origin, a style, and a decoration.

The title and the keywords of the network resource are also manually filled by the network resource provider during the release of the network resource.

In the field of electronic commerce, the network resource may be a commodity or a service. A commodity is used as example. The title, the attribute information, and the title of the network resource are in fact a title, attribute information, and keywords of the commodity.

It should be noted that in terms of big data processing, the description information of the network resource extracted in this embodiment is massive, and may even reach a hundred-million level in quantity. In this embodiment, phrases are extracted based on massive description information, so that automatic phrase extraction can be achieved for real without being restricted by manual labor.

In an optional implementation manner, considering that information in a data warehouse is relatively regular and has relatively high quality, the description information of the network resource can be directly acquired from the data warehouse. For example, the network resource is a commodity, and the description information includes a title, attribute information, and keywords of the commodity. In this case, the title, the attribute information, and the keywords of the commodity can be directly acquired from the data warehouse. For example, the title, the attribute information, and the keywords of the commodity extracted from the data warehouse are as follows.

An example of the title of the commodity is as follows:
Sexy style girls' black dress package-hip-dress one-shoulder long-sleeve green flower v-neck o-neck cocktail dress wholesale-retail free shipping 100% cotton

An example of the attribute information of the commodity is as follows:
Length: floor-length|Decoration: beading|Gender: woman|Season: summer|Pattern Type: print|Sleeve Style: off the shoulder|Neckline: o-neck|Style: casual|Place of Origin: Fujian, China Mainland|Number: LC2132-1 LC2132-2 LC2132-3
An example of the keywords (separated by commas) of the commodity is as follows:
Blue Dress Party, Fashion Ladies Blue Dress Party, Fashion Ladies Blue Dress Party
In an optional implementation manner, the description information of the network resource may have some irregularities and errors. For example, strange symbols are used to connect words, a plurality of words is written together and cannot be properly separated, words are misspelled, and the same word or phrase has different forms in different positions. Accordingly, if the description information is directly used, subsequent processing becomes more difficult and the quality of extracted phrases is lowered. Based on this, an implementation manner of acquiring the description information of the network resource includes: extracting original description information of the network resource from the data warehouse, and performing text preprocessing on the original description information to acquire description information after text preprocessing.

The step of performing text preprocessing on the original description information includes, but is not limited to:
performing at least one of connecting-symbol retention processing, case conversion processing, spelling consistency check processing, word segmentation processing, spelling correction processing, and noun lemmatization processing on the original description information.

Connecting-symbol retention processing:
Some strange connecting symbols such as a plus sign "+" may exist in the original description information. The original description information may become relatively regular after these strange connecting symbols are removed to facilitate subsequent processing. However, some special connecting symbols may be able to express special or additional meanings.

For example, it is found through analysis that a hyphen "-" is usually actively added when a network resource provider fills description information of a network resource, and is used to connect two or more related words. The network resource provider may want to connect these words together to express a richer semantic meaning. For example, "o-neck" is a correct spelling and expresses the meaning of a "round neckline." If the hyphen "-" is removed, a misspelling "oneck" is obtained, and may be corrected to "neck" in subsequent correction processing. As a result, its original meaning is lost.

For another example, the percent sign "%" may be used to represent compositional content in some cases. For example, the percent sign in "100% cotton" represents the cotton content is one hundred percent, and therefore should be retained. Certainly, a percent sign that does not need to be retained may be removed. For example, the percent sign in "v-neck%" does not need to be retained and can be deleted.

For another example, the single quotation mark "'" may express a possessive relationship in some cases. For example, the single quotation mark in " girls' " represents a possessive relationship and needs to be retained. Certainly, a single quotation mark that does not need to be retained may be removed. For example, the single quotation mark in " shoulder' " is redundant and can be deleted.

Based on the foregoing, formats that need to be retained may be designated in advance for a hyphen, a single quotation mark or a percent sign. During the connecting-symbol retention processing performed on the original description information, it may be determined whether the original description information includes a hyphen, a single quotation mark or a percent sign that conforms to a designated format. If the determining result is yes, the hyphen, single quotation mark or percent sign that conforms to the designated format in the original description information may be retained. A hyphen, a single quotation mark, a percent sign or another connecting symbol that exists in the original description information and does not conform to the designated format can be deleted.

For example, a title of a commodity before connecting-symbol retention processing is as follows:
SEXY style girls' black dresses package-hip-dress one shouder' longSLEEVE++Green flowers+v-neck% oneck COCKAIL DR-ESS+wholesale and retail+free shipping 100%cotton
The title after the connecting-symbol retention processing is as follows:
SEXY style girls' black dresses package-hip-dress one shouder longSLEEVE Green flowers v-neck oneck COCKAIL DR-ESS wholesale and retail free shipping 100% cotton

It should be noted that during the processing of a percent sign, if it is found that the percent sign needs to be retained but there is no space between the percent sign and a subsequent word, a space may be added. For example, "100%cotton" above is changed to "100% cotton." Therefore, more regular information can be obtained after preprocessing.

Case conversion processing:
The case conversion processing here is to keep the consistency of upper and lower cases. According to a specific application requirement, all upper cases may be converted into lower cases, or all lower cases may be converted into upper cases.

The title of the commodity is used as an example. After the connecting-symbol retention processing is performed, an example of the title before the case conversion processing is as follows:
SEXY style girls' black dresses package-hip-dress one shouder longSLEEVE Green flowers v-neck oneck COCKAIL DR-ESS wholesale and retail free shipping 100% cotton
An example of the title after the connecting-symbol retention processing and the case conversion processing is as follows:
sexy style girls' black dresses package-hip-dress one shouder longsleeve green flowers v-neck oneck cockail dr-ess wholesale-retail free shipping 100% cotton
Spelling consistency check processing:
It is found through analysis that the same word may be spelled differently in different positions. For example, the word "dresses" has different spellings as follows (the list being not exhaustive): "dresses," "dr-esses," and "dress-es." Such different spellings increase the difficulty in subsequent analysis, and the quality of extracted phrases is adversely affected. Based on this, the spelling consistency check processing is performed on the original description information in advance herein to convert these words having different spellings into the same spelling.

Specifically, for each word or phrase in the original description information, if the word or phrase has a plurality of spellings in the original description information, the number of times that each spelling repetitively appears in the data warehouse is counted. According to the number of times that each spelling repetitively appears in the data warehouse, a spelling of which the number of times that the spelling repetitively appears is the largest and is greater than a preset threshold is selected from the plurality of spellings and used as a target spelling. Other spellings of the word or phrase that appear in the original description information are replaced with the target spelling.

For example, it is assumed that there appear a total of three spellings, namely, "dresses," "dr-esses," and "dress-es" of the word "dresses" in the description information. It is found by collecting statistics that "dresses" is the spelling of which the number of times that the spelling appears in the data warehouse is the largest and is greater than a preset number-of-times threshold. In this case, "dresses" may be used as a target spelling, and the spellings "dr-esses" and "dress-es" are replaced with "dresses."

The title of the commodity is still used as an example. Spelling consistency check processing is further performed on the example of the title that has undergone the connecting-symbol retention processing and the case conversion processing, so that the example is converted into:
sexy style girls' black dresses package-hip-dress one shouder longsleeve green flowers v-neck o-neck cockail dress wholesale-retail free shipping 100% cotton
Word segmentation processing:
It is found through analysis that a plurality of words is often written together in the original description information, for example, "longsleeve" in the title. There are further misspelled words, for example, "shouder" (which should be "shoulder") and "cockail" (which should be "cocktail") in the title. These errors affect subsequent processing severely and therefore need to be corrected.

For the foregoing problem, a specific correction manner is: performing word segmentation processing on the original description information, that is, recognizing existing words written together in the original description information, and segmenting the recognized words written together.

For example, an example of a result of the word segmentation processing is as follows:
longsleevefloorlengthdress -> long sleeve floor length dress
dgdhlongsleevekl -> dgdh long sleeve kl
swearskirt -> swear skirt

In the foregoing example, words written together are on the left side of "->," and a result of segmentation is on the right side of "->." In the first example above, a character string to be processed is formed of words, and after word segmentation, the words are obtained through segmentation. In the second example above, there are several interfering characters at the front, and there are interfering characters at the end. After word segmentation, not only definite words (longs sleeve) are obtained through segmentation, but also interfering characters are recognized. In the third example above, an optimal segmentation strategy is used to enable the words obtained through segmentation to have meanings that better conform to the context.

In conclusion, the word segmentation processing is to eliminate as many interfering characters at the front and end as possible to recognize words, and determine an optimal segmentation strategy with reference to the context, to make the meaning more comprehensible.
Spelling correction processing:
The spelling correction is to change a misspelled form to a correct form. For example, "sieve" is corrected to "sleeve." It should be noted that the spelling correction here is performed for any character string (token). The character string here may be a word or may be a plurality of words. As such, in the spelling correction, not only a misspelled word can be corrected, but also a phrase that is formed of a plurality of words but is misspelled can be corrected.

For example, an example of a result of spelling correction processing is as follows:
sieve -> sleeve
dres -> dress
wholesle -> wholesale
shouder -> shoulder
saikaaadffdsaf -> saikaaadffdsaf
sleeve -> sleeve
sleever -> sleeve
sleeev -> sleeve
sleeevt -> sleeve
longsleve -> longsleeve

In the foregoing example, the misspelled form is on the left side of "->," and the corrected spelling form is on the right side of "->."

The word segmentation processing and the spelling correction processing are separately described above, and may be used in combination during actual application. Some words that are written together may also be misspelled. For example, "longsleve" in the foregoing example of the title is a misspelled form on which word segmentation cannot be directly performed. Therefore, the misspelled form needs to be corrected first. For example, "longsleve" is corrected to "longsleeve." After the correction, word segmentation processing can be performed on "longsleeve" to obtain a correct form "long sleeve." Herein, by using word segmentation and spelling correction in combination, many problems that cannot be resolved by using a single technology can be resolved, so that the effect of data preprocessing can be improved.

The title of the commodity is still used as an example. Word segmentation and spelling correction are further performed on the foregoing example of the title that has undergone the connecting-symbol retention processing, the case conversion processing, and the spelling consistency check processing, so that the example is converted into:
sexy style girls' black dresses package-hip-dress one shoulder long sleeve green flowers v-neck o-neck cocktail dress wholesale-retail free shipping 100% cotton
Noun lemmatization:
The noun lemmatization mainly refers to lemmatizing a noun in the original description information, that is, changes a plural noun to a singular noun.

It should be noted that in this embodiment, considering that a gerund verb or a past tense verb may be adjectives and may express particular meanings, lemmatization of verbs and adjectives is not considered at present.

In this embodiment, lemmatization may be performed on a noun in the original description information according to at least one of a dictionary and a preset rule of singular-plural conversion.

A noun lemmatization manner that is performed based on a dictionary is a relatively brute-force manner, but is relatively reliable. A specific approach is: acquiring all nouns and plural forms of the nouns from the dictionary, constructing mapping relationships between the nouns and the plural forms of the nouns, subsequently recognizing a plural noun in the description information based on the mapping relationship, and changing the plural noun back to a singular noun.

In a noun lemmatization manner based on a preset singular-plural conversion rule, the singular-plural noun conversion rule is set in advance. For example, methods for changing a noun to a plural form generally include adding "s" at the end, changing an end character "y" to "ies," and the like. Subsequently, a plural noun in the description information is recognized based on the conversion rule, and reverse processing is performed on the recognized plural noun according to the conversion rule to change the plural noun back to a singular noun.

During actual application, noun lemmatization processing may be preferentially performed based on a dictionary. If a noun cannot be changed back to a singular noun based on the dictionary, noun lemmatization processing is further performed based on a singular-plural conversion rule. Generally, the dictionary has relatively high accuracy, whereas the rule has relatively wide coverage. If the dictionary and the rule are used in combination, the accuracy of noun lemmatization can be ensured, and it can also be ensured that as many nouns as possible are changed from plural nouns back to singular nouns.

The title of the commodity is still used as an example. The noun lemmatization is further performed on the example of the title that has undergone the connecting-symbol retention processing, the case conversion processing, the spelling consistency check processing, the word segmentation, and the spelling correction, so that the example is converted into:
sexy style girls' black dress package-hip-dress one shoulder long sleeve green flower v-neck o-neck cocktail dress wholesale-retail free shipping 100% cotton
It should be noted that each text preprocessing manner is separately described above. During actual application, various text preprocessing manners may be separately used or may be used in combination.

The original description information becomes regular after various kinds of text preprocessing in the foregoing, providing a basis for subsequent phrase extraction.

Next, the acquired description information can be used as the extraction corpus for phrase extraction.

In this embodiment, to achieve more comprehensive phrase extraction, the phrase extraction apparatus performs phrase extraction in two aspects. In one aspect, the phrase extraction apparatus performs the explicit-phrase extraction procedure on the description information to extract an explicit phrase from the description information. In the other aspect, the phrase extraction apparatus performs the mode-phrase extraction procedure on the description information to extract an implicit phrase from the description information.

The explicit phrase is a phrase that can be easily discovered, and the implicit phrase is a phrase that cannot be easily discovered. As can be seen, the phrase extraction apparatus can extract both an explicit phrase and an implicit phrase. Therefore, more comprehensive phrase extraction can be achieved. In addition, the phrase extraction apparatus performs phrase extraction based on massive description information without depending on manual labor. Therefore, errors that occur in manual work can be avoided, and phrase quality can be ensured.

It should be noted that an order of performing the operation of extracting an explicit phrase and the operation of extracting an implicit phrase is not limited in this embodiment. The operations may be performed in either order or may be performed concurrently.

Further, the explicit-phrase extraction procedure includes: a step of loading a preset explicit phrase rule and a step of extracting an explicit phrase from the description information according to the explicit phrase rule. Based on this, an implementation manner of performing an explicit-phrase extraction procedure on the description information to extract an explicit phrase from the description information includes:
loading a preset explicit phrase rule; and
extracting an information segment that conforms to the explicit phrase rule from the description information and using the information segment as the explicit phrase.

In an optional implementation manner, the explicit phrase rule includes, but is not limited to, at least one rule of a designated character-string condition rule, a field dictionary rule, and an attribute value rule.

The designated character-string condition rule is used to indicate that a character string that conforms to a designated character-string condition can be used as the explicit phrase.

The field dictionary rule is used to indicate that a phrase that is in a field dictionary can be used as the explicit phrase. Field dictionaries are different according to different fields. For example, in the garment field, *English-Chinese Textiles Dictionary* may be used as a field dictionary.

The attribute value rule is used to indicate that an attribute value in the attribute information of the network resource can be used as the explicit phrase.

Based on the foregoing specific explicit phrase rules, the step of extracting an information segment that conforms to the explicit phrase rule from the description information and using the information segment as the explicit phrase may specifically include at least one operation in the following:
extracting a character string that conforms to a designated character-string condition from the description information and using the character string as the explicit phrase;
extracting a phrase that is in a field dictionary from the description information and using the phrase as the explicit phrase; and
extracting, when the description information includes attribute information of the network resource, an attribute value in the attribute information, and using the attribute value as the explicit phrase.

The solution of extracting a character string that conforms to a designated character-string condition and using the character string as the explicit phrase is described below in detail.

Specifically, there is a character string connected by a hyphen "-" in the description information of the network resource. For example, "package-hip-dress," "v-neck," "o-neck," "wholesale-retail," "one-shoulder," "long-sleeve," and the like are all character strings connected by a hyphen "-." A character string connected by a hyphen "-" is usually formed by connecting a plurality of words together and can express a richer semantic meaning. Therefore, a probability that a character string connected by a hyphen "-" is a phrase is relatively high. Certainly, some character strings connected by a hyphen "-" may have no actual meaning and therefore cannot be used as a phrase. For example, "a-b," "v-neck-half-sleeve-dress," and the like are not phrases.

Based on the foregoing, some conditions may be set to define a character string that is connected by a hyphen "-" and can be used as a phrase. These defining conditions are referred to as character-string conditions, and specifically include at least one condition in the following:
the character string is connected by a hyphen "-": this condition is used to define that the character string needs to be connected by a hyphen "-" to become a phrase, wherein the character string connected by a hyphen "-" may be referred to as a token;
the number of times that the character string appears is greater than a preset number-of-times threshold: this condition requires that the number of times that the character string appears should be greater than the preset number-of-times threshold, for example, greater than 500, and the number of times that the character string appears here is the counted number of times that the character string appears in the data warehouse;
the character string is not an English word: the condition is used to eliminate a word, that is, a word is not a phrase;
the last word of the character string does not end with "s," "es," "ex," "ed," "d," "ing," "ings," "ry," "ies," "ves," "y" or "a": this condition is mainly used to avoid that the phrase includes a plural noun, a past tense verb, a present progressive, or the like;
the character string does not include a conjunction: this condition is mainly used to avoid that the phrase includes a conjunction (such as "and," "but," "or," "for," "so," and "nor");
the character string does not include a stop word: this condition is mainly used to avoid that a stop word (such as "of' and "a") appears in the phrase;
the character string includes a designated quantity of words: the meaning of this condition is that the character string needs to include the designated quantity of words to be a phrase; otherwise, the character string cannot be a phrase;
the character string does not include a number (except a percentage): the meaning of this condition is that a character string that includes a number cannot be a phrase;
the length of a word in the character string is less than a designated length (for example, less than 20 letters): the meaning of this condition is that the length of a word in the character string needs to be less than a designated length for the character string to be a phrase; otherwise, the character string cannot be a phrase;
the length of the character string is greater than the quantity of words included in the character string: the meaning of this condition is that the length of the character string needs to be greater than the quantity of words included in the character string for the character string to be a phrase; otherwise, the character string cannot be a phrase; and
the character string does not conform to a designated regular rule: the meaning of this condition is that a character string that does not conform to the designated regular rule can be a phrase, and in contrast, a character string that conforms to the regular rule cannot be a phrase; for example, the regular rule here includes, but is not limited to, "as-\w+," representing a character string that begins with "as-," and "so-\w+," representing a character string that begins with "so-."

Based on the foregoing character-string conditions, which character strings are explicit phrases and which character strings are not explicit phrases may be determined. For example:
Character strings that are not phrases:
   sleeve-less: the last word ends with "s;"
   dress-es: the last word ends with "s" or "es;"
   sleeve-s: the last word ends with "s;"
   full-sleevevneckdresssexyclubwear: the length of a word in the character string exceeds a designated length;
   a-b: the length of the character string is not greater than the quantity of words included in the character string;
   half-3sleeve: the character string includes a number 3;
   v-neck-half-sleeve-dress: the character string includes too many words;
   fashion-ladies-blue-dress-party: the character string includes too many words;
   as-picture: the character string conforms to a designated regular rule; and
   so-good: the character string conforms to a designated regular rule.
Character strings that are phrases:
   v-neck
   deep-v-neck
   green-flower
   floor-length
   100%-silk.

The description information of the network resource may include, but is not limited to, the title, the attribute information, and the keywords of the network resource. Considering this, during the implementation of extracting a character string that conforms to a designated character-string condition and using the character string as the explicit phrase, the title, the attribute information, the keywords, and the like of the network resource may be combined into one information set. A character string that conforms to a designated character-string condition is then extracted from the information set and used as the explicit phrase. Alternatively, during the implementation of extracting a character string that conforms to a designated character-string condition and using the character string as the explicit phrase, a character string that conforms to a designated character-string condition may be separately extracted from the title of the network resource and used as the explicit phrase, a character string that conforms to a designated character-string condition may be separately extracted from the attribute information of the network resource and used as the explicit phrase, a character string that conforms to a designated character-string condition may be separately extracted from the keywords of the network resource and used as the explicit phrase, and the like.

A network resource generally has a plurality of attributes. However, not all the attributes are useful for phrase extraction. Based on this, a screening rule may be configured in advance according to a specific application scenario and used to screen all the attributes to obtain attributes that are useful for phrase extraction. The obtained attributes are referred to as critical attributes. Next, the critical attributes are used as a corpus to perform phrase extraction.

The field of electronic commerce is used as an example. The network resource is a commodity. A user configures a screening rule in advance, and selects critical attributes by using the screening rule. Different resource categories correspond to different screening rules, and different critical attributes are obtained through screening. It is assumed that a category whose id is 3 is Apparel. Critical attributes that are obtained through screening according to a preset screening rule include, but are not limited to, those shown in Table 1.

**Table 1**

| Category name | Category ID | Name of Critical Attribute |
|---|---|---|
| Apparel | 3 | Length |
| Apparel | 3 | Decoration |
| Apparel | 3 | Sleeve Style |
| Apparel | 3 | Neckline |
| Apparel | 3 | Gender |

The solution of extracting a phrase that is in a field dictionary and using the phrase as the explicit phrase is described below in detail.

Specifically, the field dictionary stores phrases in the current field. Therefore, it can be directly determined whether the description information includes a phrase that is in the field dictionary. If yes, the phrase can be directly determined as an explicit phrase. Such a manner has relatively simple implementation and relatively high efficiency, and is particularly suitable for discovering relatively obvious phrases.

The foregoing solution of extracting an attribute value in the attribute information and using the attribute value as the explicit phrase is described below in detail.

Specifically, the attribute information generally includes an attribute name and an attribute value. A general implementation structure is "attribute name: attribute value." In this implementation structure, the attribute value is usually a phrase having a clear meaning. Therefore, the attribute information may be directly found from the description information, and the attribute value in the attribute information is then extracted and used as the explicit phrase.

In the foregoing embodiment or implementation manner, the explicit phrase may be extracted in several manners in the foregoing. It should be noted that the several manners of extracting the explicit phrase in the foregoing may be used separately or may be used in any combination.

Further, the mode-phrase extraction procedure includes: a step of loading a preset mode combination rule and a step of extracting an implicit phrase from the description information according to the mode combination rule. Based on this, the foregoing implementation manner of performing the mode-phrase extraction procedure on the description information to extract an implicit phrase from the description information includes:
loading a preset mode combination rule; and
extracting an information segment that conforms to the mode combination rule from the description information and using the information segment as the implicit phrase.

In an optional implementation manner, the mode combination rule includes, but is not limited to, at least one rule of a part-of-speech combination rule, a regular expression rule, and an attribute expression rule.

The part-of-speech combination rule is used to indicate that a word combination that conforms to a designated part-of-speech combination condition may be used as the implicit phrase.

The regular expression rule is used to indicate that a word combination that conforms to a designated regular expression may be used as the implicit phrase.

The attribute expression rule is used to indicate that the implicit phrase is generated based on a preset generation rule and according to the attribute information.

Based on a specific mode phrase rule, the step of extracting an information segment that conforms to the mode phrase rule from the description information and using the information segment as the implicit phrase may specifically include at least one operation in the following:
extracting a word combination that conforms to a designated part-of-speech combination condition from the description information and using the word combination as the implicit phrase;
extracting a word combination that conforms to a designated regular expression from the description information and using the word combination as the implicit phrase; and
generating, when the description information includes attribute information of the network resource, the implicit phrase based on a preset generation rule and according to the attribute information.

The foregoing solution of extracting a word combination that conforms to a designated part-of-speech combination condition from the description information and using the word combination as the implicit phrase is described below in detail.

Specifically, it is found through research and analysis that some part-of-speech combination modes are usually phrases. For example, word combinations such as "adjective + noun" ("^JJ\\s+NNS{0,1}$") and "adjective + adjective + noun" ("^JJ\\s+JJ\\s+NNS{0,1}$") are usually phrases. Based on this, the part-of-speech combination condition may include: an "adjective + noun" mode and an "adjective + adjective + noun" mode. Certainly, in addition to the two part-of-speech combination modes, there are further other part-of-speech combination modes. For example, "green flowers," "natural-color," "hooded-collar," and the like are word combinations in the "adjective + noun" mode and are phrases. For another example, "small green flowers" and the like are word combinations in the "adjective + adjective + noun" mode and are also phrases.

During specific implementation, the phrase extraction apparatus may set a window length according to the number of words included in a phrase, sequentially sample the description information according to the set window length, and then determine whether a sampled word combination conforms to the part-of-speech combination condition in terms of parts of speech. If the determining result is yes, the phrase extraction apparatus determines that the word combination is an implicit phrase. If the determining result is no, the phrase extraction apparatus discards the word combination and continues to perform next sampling.

If it is set that a phrase includes two or three words, two window lengths, namely, 2 and 3, may be set and used to sample a word combination whose length is 2 or 3.

The foregoing solution of extracting a word combination that conforms to a designated regular expression from the description information and using the word combination as the implicit phrase is described below in detail.

Specifically, some phrases are not fixed collocations and do not conform to the part-of-speech combination mode. That is, such phrases cannot be obtained by using a normal grammatical measure. However, these phrases conform to a particular word formation manner. For example, there are phrases that end with "style," or phrases that begin with a percentage, and the like. For these phrases, a regular expression is preset, and a word combination that conforms to the preset regular expression is a phrase.

Several regular expressions representing phrases are enumerated as follows:
"^[a-z]*?\\s+style$" represents an "xxx" style, that is, a word combination in a "word + style" form may be a phrase and needs to be acquired; such word combination is, for example, "sexy style" or "bohemia style;"
"^[0-9]+%\\s+[a-z]+$" represents "xx% xxx," that is, a word combination in a "percentage+ word" form may be a phrase and needs to be acquired; such word combination is, for example, "100% cotton;"
"^%[0-9]+\\s+[a-z]+$" represents "%xx xxx," that is, a word combination in a "percentage + word" form may be a phrase and needs to be acquired; such word combination is, for example, "%100 cotton."

During specific implementation, the phrase extraction apparatus may search the description information according to an identifier part (for example, "style" and "%") in a regular expression. After determining the identifier part, the phrase extraction apparatus determines, according to a format of the regular expression, whether a word before or after the identifier part conforms to a requirement of the regular expression. If the determining result is yes, the phrase extraction apparatus acquires a word combination that is formed of the identifier part and the word before or after the identifier part and uses the word combination as the implicit phrase.

The foregoing solution of generating the implicit phrase based on a preset generation rule and according to the attribute information is described below in detail.

Specifically, the attribute information of the network resource includes an attribute name and an attribute value. When the description information includes attribute information of the network resource, the implicit phrase may be generated based on the preset generation rule and according to the attribute information.

Further, the generation rule is used to instruct to convert an attribute name into a presented attribute name and combine an attribute value with the presented attribute name to generate the implicit phrase.

Based on the foregoing, the step of generating the implicit phrase based on a preset generation rule and according to the attribute information includes:
generating a presented attribute name according to an attribute name in the attribute information, and combining an attribute value in the attribute information with the presented attribute name to generate the implicit phrase.

A conversion rule between an attribute name and a presented attribute name may be preset, and the presented attribute name is then generated based on the conversion rule. The conversion rule may be adaptively set according to different application scenarios. A garment category in the field of electronic commerce is used as an example. An example of the conversion rule between an attribute name and a presented attribute name is as follows:
dresses length/dress
sleeve length/sleeve
sleeve style/sleeve
sleeve type/sleeve
sleeve/sleeve
hooded/hooded
material/NULL
neckline/neckline
waistline/waistline
decoration/decoration
style/style
silhouette/silhouette
fabric type/fabric
season/NULL
for season/NULL
for the season/NULL
pattern type/pattern
color/NULL
color style/NULL
technics/technics
item type/NULL
item name/NULL
product category/NULL
outerwear type/outerwear
eyewear type/NULL
scarves type/NULL
clothing length/clothing
collar/collar
closure type/closure
thickness/thickness
back design/back
built-in bra/built-in bra
waistline/waistline
wedding dress fabric/NULL

In the foregoing example, each example includes three parts: an attribute name, a slash, and a presented attribute name. The slash is used to separate the attribute name and the presented attribute name. The attribute name is on the left side of the slash, and the presented attribute name is on the right side of the slash.

Based on the foregoing example, a manner of generating the implicit phrase is "attribute value + presented attribute name." During specific implementation, the phrase extraction apparatus may acquire the attribute information, convert the attribute name in the attribute information into the presented attribute name according to the conversion rule, and then combine the attribute value with the presented attribute name in the foregoing manner to form the implicit phrase.

For example, it is assumed that a piece of attribute information is "sleeve length: half," wherein the attribute name is "sleeve length," and the attribute value is "half." The attribute name "sleeve length" may be converted into the presented attribute name "sleeve." The attribute value "half' and the presented attribute name "sleeve" are combined to generate the implicit phrase "half-sleeve."

For another example, it is assumed that a piece of attribute information is "sleeve style: bat wing," wherein the attribute name is "sleeve style," and the attribute value is "bat wing." The attribute name "sleeve style" may be converted into the presented attribute name "sleeve." The attribute value "bat wing" and the presented attribute name "sleeve" are combined to generate the implicit phrase "bat-wing-sleeve."

It should be noted that the presented attribute name may be "NULL." That is, when the implicit phrase is generated, the presented attribute name is null, and the attribute name is not used.

In addition, some attribute values have a Boolean type. For example, the attribute information is "build-in-bra: yes" (usually used for commodities in a wedding dress category to express whether a bra is built in a wedding dress). If the attribute value is "yes" or "y" and the like that indicates "yes," the attribute value may be directly omitted during formation of the implicit phrase, or otherwise, the attribute value is not omitted. For example, according to the attribute information "build-in-bra: yes," the formed implicit phrase is "build-in-bra." For example, according to the attribute information "build-in-bra: not," the formed implicit phrase is "not-build-in-bra."

As can be seen, the implicit phrase may be extracted after several operations in the foregoing. It should be noted that the several manners of extracting the implicit phrase in the foregoing may be used separately, or may be used in any combination.

Further, in an optional implementation manner, as shown in FIG. 2, after the explicit phrase and the implicit phrase are extracted, the method further includes:
104: Derivation is performed on the explicit phrase and the implicit phrase to obtain a derived phrase.

In an optional implementation manner, an implementation manner of step 104 includes: collecting statistics of an Inverse Document Frequency (IDF) value of a noun in the explicit phrase or the implicit phrase; deleting a noun whose IDF value is lower than a preset threshold from the explicit phrase or the implicit phrase to obtain a phrase segment; and determining whether the phrase segment conforms to a phrase condition, and if the determining result is that the phrase segment conforms to the phrase condition, determining the phrase segment as the derived phrase, or if the determining result is that the phrase segment does not conform to the phrase condition, discarding the phrase segment.

It should be noted that the phrase condition is mainly used to determine whether one phrase segment is a phrase. During specific implementation, the phrase condition herein may include, but is not limited to, the foregoing specific explicit phrase rule (for example, a character-string condition, a field dictionary, and a rule of extracting an attribute value) and the specific mode combination rule (for example, a part-of-speech combination condition, a regular expression, and a generation rule), and the like. This means that if a remaining phrase segment obtained after the noun whose IDF value is lower than the preset threshold is removed conforms to the character-string condition, the field dictionary, the rule of extracting an attribute value, the part-of-speech combination condition, the regular expression or the generation rule, the phrase segment is determined as a phrase.

For example, it is assumed that the explicit phrases and the implicit phrases extracted in the steps include: "half-sleeve-dress," "package-hip-dress," and "full-sleeve-dress." It is found through statistics that an IDF value of the noun "dress" is lower than a threshold. Therefore, this noun is removed from corresponding phrases to obtain phrase segments "half-sleeve," "package-hip," and "full-sleeve." It is found through analysis that the three phrase segments all conform to the phrase condition. In this case, the phrase segments "half-sleeve," "package-hip," and "full-sleeve" are all used as derived phrases.

Based on the foregoing, all phrases in a word library include: "half-sleeve-dress," "package-hip-dress," "full-sleeve-dress," "half-sleeve," "package-hip," and "full-sleeve."

In this embodiment, the phrase extraction apparatus performs derivation on the explicit phrase and the implicit phrase that are extracted previously, so that new phrases (that is, derived phrases) may further be extracted to enrich extracted phrases and make the extracted phrases more comprehensive.

Furthermore, after the explicit phrase, the implicit phrase, and the derived phrase are extracted, a correction operation may further be performed on the extracted phrases to facilitate the removal of bad cases of the phrases, thus ensuring the quality of phrases and improving the usability of phrases.

Specifically, the explicit phrase, the implicit phrase, and the derived phrase may be combined to form a phrase set; and at least one correction operation in the following is performed on the phrase set:
noun lemmatization, stop word removal, and low-frequency cognate phrase removal.

The noun lemmatization is: determining a phrase that is in the phrase set and includes a plural noun, and changing the plural noun in the phrase back to a singular noun. For example, "sexy-style-dresses" is changed to "sexy-style-dress."

The stop word removal is: determining a phrase that is in the phrase set and includes a stop word, and replacing, if a remaining part obtained after the stop word is removed from the phrase conforms to a phrase condition, the phrase with the remaining part. Here, the phrase condition is the same as the foregoing phrase condition, and details are no longer described.

The stop word here is mainly a stop word in a stop word table matching a field. Stop words in the stop word table are mainly standard stop words. For example, standard stop words of English are as follows. However, considering that some standard stop words may be shared in different fields, these standard stop words such as "with," "between," "under," and "over" may be removed from the stop word table.

For example, standard stop words of English include the following words:
[u'i', u'me', u'my', u'myself, u'we', u'our', u'ours', u'ourselves', u'you', u'your', u'yours', u'yourself, u'yourselves', u'he', u'him', u'his', u'himself, u'she', u'her', u'hers', u'herself, u'it', u'its', u'itself, u'they', u'them', u'their', u'theirs', u'themselves', u'what', u'which', u'who', u'whom', u'this', u'that', u'these', u'those', u'am', u'is', u'are', u'was', u'were', u'be', u'been', u'being', u'have', u'has', u'had', u'having', u'do', u'does', u'did', u'doing', u'a', u'an', u'the', u'and', u'but', u'if, u'or', u'because', u'as', u'until', u'while', u'of, u'at', u'by', u'for', u'with', u'about', u'against', u'between', u'into', u'through', u'during', u'before', u'after', u'above', u'below', u'to', u'from', u'up', u'down', u'in', u'out', u'on', u'off', u'over', u'under', u'again', u'further', u'then', u'once', u'here', u'there', u'when', u'where', u'why', u'how', u'all', u'any', u'both', u'each', u'few', u'more', u'most', u'other', u'some', u'such', u'no', u'nor', u'not', u'only', u'own', u'same', u'so', u'than', u'too', u'very', u's', u't', u'can', u'will', u'just', u'don', u'should', u'now']

In addition, the stop word table here may further include a phrase (which may be referred to as a useless word) that contributes little or is not shared in fields. For example, "wholesale," "retail," "shipping," "free-shipping," "fashion," "price," "offer," "none," "quantity," "shipment," and the like are useless words in the field of electronic commerce.

The low-frequency cognate phrase removal is: determining cognate phrases in the phrase set, and deleting a phrase that is in the cognate phrases and has word frequency that does not conform to a designated word frequency condition, the cognate phrases including phrases whose first n words are the same, and n being a natural number greater than or equal to 2. For example, phrases whose first two words are the same may be determined as cognate phrases. For example, "half-sleeve-dress," "half-sleeve-shirt," "half-sleeve-long," and "half-sleeve" are cognate phrases. It is found through statistics that the word frequency of "half-sleeve-dress" is 1000, the word frequency of "half-sleeve-shirt" is 900, the word frequency of "half-sleeve-long" is 10, and the word frequency of "half-sleeve" is 1100. Meanwhile, it is set that the designated word frequency condition is that the word frequency of a phrase is less than the word frequency of a cognate phrase of the phrase by more than 30%. It can be determined that "half-sleeve-long" conforms to the designated word frequency condition, that is, the word frequency 10 of "half-sleeve-long" is less than the word frequency 1100 of "half-sleeve" by more than 30%. Therefore, "half-sleeve-long" can be removed.

As can be seen from above, in the present application, description information of a network resource is used as a corpus required for phrase extraction, and an explicit-phrase extraction procedure and a mode-phrase extraction procedure are first performed on the description information, so that an explicit phrase that can be easily discovered and an implicit phrase that cannot be easily discovered can be extracted from the description information, more comprehensive phrase extraction can be achieved, and phrase quality can be ensured.

Further, in the present application, derivation is performed on the extracted explicit phrase and implicit phrase to obtain a derived phrase to further extract a new phrase (that is, a derived phrase), so that extracted phrases can be enriched, and the extracted phrases can be more comprehensive.

Furthermore, in the present application, a correction operation is performed on eventually extracted phrases, so that the phrases can have regular forms, bad cases in the phrases can be removed, phrase quality can be ensured, and the usability of a word library can be improved eventually.

It should be noted that for brevity, the foregoing method embodiments are described as a series of action combinations. However, those skilled in the art should understand that the present application is not limited to the described action order, because according to the present application, some steps may adopt another order or occur simultaneously. Moreover, those skilled in the art should also understand that the embodiments described in the specification all belong to preferred embodiments, and the involved actions and modules are not necessarily mandatory in the present application.

In the above embodiments, the descriptions of the various embodiments have different emphases, and for a part not included in a particular embodiment, reference can be made to related descriptions of other embodiments.

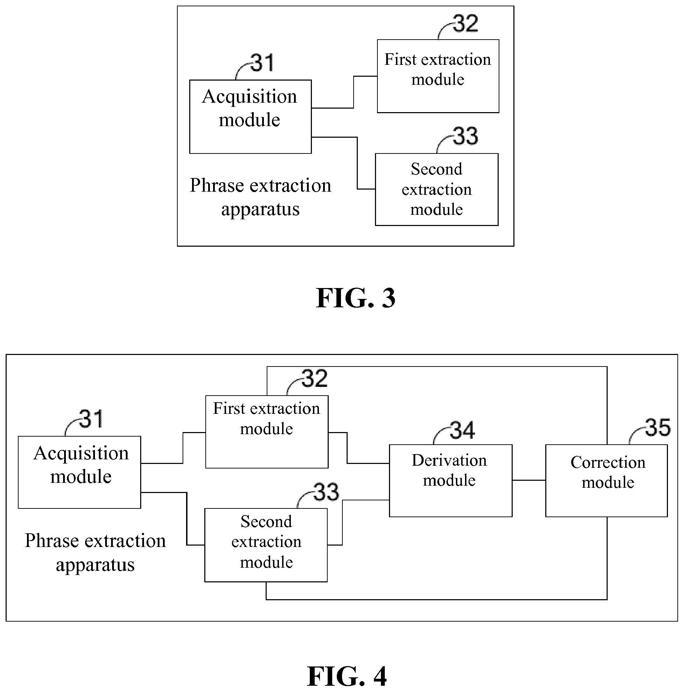

FIG. 3 is a schematic structural diagram of a phrase extraction apparatus according to still another embodiment of the present application. As shown in FIG. 3, the apparatus includes: an acquisition module 31, a first extraction module 32, and a second extraction module 33.

The acquisition module 31 is configured to acquire description information of a network resource.

The first extraction module 32 is configured to perform an explicit-phrase extraction procedure on the description information to extract an explicit phrase from the description information.

The second extraction module 33 is configured to perform a mode-phrase extraction procedure on the description information to extract an implicit phrase from the description information.

It should be noted that for ease of description, in terms of modular division, extraction modules include the first extraction module 32 and the second extraction module 33. However, the present application is not limited to this implementation structure. For example, the first extraction module 32 and the second extraction module 33 may be combined into one extraction module for implementation. In addition, the order of extraction operations performed by the first extraction module 32 and the second extraction module 33 is not limited.

In an optional implementation manner, the first extraction module 32 is specifically configured to:
load a preset explicit phrase rule; and
extract an information segment that conforms to the explicit phrase rule from the description information and use the information segment as the explicit phrase.

Further, the explicit phrase rule includes, but is not limited to, at least one rule of a designated character-string condition rule, a field dictionary rule, and an attribute value rule.

The designated character-string condition rule is used to indicate that a character string that conforms to a designated character-string condition can be used as the explicit phrase.

The field dictionary rule is used to indicate that a phrase that is in a field dictionary can be used as the explicit phrase. Field dictionaries are different according to different fields. For example, in the garment field, *English-Chinese Textiles Dictionary* may be used as a field dictionary.

The attribute value rule is used to indicate an attribute value in the attribute information of the network resource can be used as the explicit phrase.

Based on the foregoing specific explicit phrase rules, the first extraction module 32 is specifically configured to perform at least one operation in the following:
extracting a character string that conforms to a designated character-string condition from the description information and using the character string as the explicit phrase;
extracting a phrase that is in a field dictionary from the description information and using the phrase as the explicit phrase; and
extracting, when the description information includes attribute information of the network resource, an attribute value in the attribute information, and using the attribute value as the explicit phrase.

Furthermore, the designated character-string condition includes at least one condition in the following:
the character string is connected by a hyphen "-;"
the number of times that the character string appears is greater than a preset number-of-times threshold;
the character string is not an English word;
the last word of the character string does not end with "s," "es," "ex," "ed," "d," "ing," "ings," "ry," "ies," "ves," "y" or "a;"
the character string does not include a conjunction;
the character string does not include a stop word;
the character string includes a designated quantity of words;
the character string does not include a number;
the length of a word in the character string is less than a designated length;
the length of the character string is greater than the quantity of words included in the character string; and
the character string does not conform to a designated regular rule.

In an optional implementation manner, the second extraction module 33 is specifically configured to:
load a preset mode combination rule; and
extract an information segment that conforms to the mode combination rule from the description information and use the information segment as the implicit phrase.

Further, the mode combination rule includes, but is not limited to, at least one rule of a part-of-speech combination rule, a regular expression rule, and an attribute expression rule.

The part-of-speech combination rule is used to indicate that a word combination that conforms to a designated part-of-speech combination condition can be used as the implicit phrase.

The regular expression rule is used to indicate that a word combination that conforms to a designated regular expression can be used as the implicit phrase.

The attribute expression rule is used to indicate that the implicit phrase is generated based on a preset generation rule and according to the attribute information.

Based on the foregoing specific mode phrase rule, the second extraction module 33 is specifically configured to perform at least one operation in the following:
extracting a word combination that conforms to the designated part-of-speech combination condition from the description information and using the word combination as the implicit phrase;
extracting a word combination that conforms to a designated regular expression from the description information and using the word combination as the implicit phrase; and
generating, when the description information includes attribute information of the network resource, the implicit phrase based on a preset generation rule and according to the attribute information.

Furthermore, when generating the implicit phrase based on the preset generation rule and according to the attribute information, the second extraction module 33 is specifically configured to:
generate a presented attribute name according to an attribute name in the attribute information, and combine an attribute value in the attribute information with the presented attribute name to generate the implicit phrase.

In an optional implementation manner, as shown in FIG. 4, the apparatus further includes a derivation module 34.

The derivation module 34 is configured to perform derivation on the explicit phrase and the implicit phrase to obtain a derived phrase.

Further, the derivation module 34 is specifically configured to:
collect statistics of an Inverse Document Frequency (IDF) value of a noun in the explicit phrase or the implicit phrase;
delete a noun whose IDF value is lower than a preset threshold from the explicit phrase or the implicit phrase to obtain a phrase segment; and
determine the phrase segment as the derived phrase if the phrase segment conforms to a phrase condition.

In an optional implementation manner, as shown in FIG. 4, the apparatus further includes a correction module 35.

The correction module 35 is configured to combine the explicit phrase, the implicit phrase, and the derived phrase to form a phrase set, and perform at least one correction operation in the following on the phrase set:
determining a phrase that is in the phrase set and includes a plural noun, and changing the plural noun in the phrase back to a singular noun;
determining a phrase that is in the phrase set and includes a stop word, and replacing, if a remaining part obtained after the stop word is removed from the phrase conforms to a phrase condition, the phrase with the remaining part; and
determining cognate phrases in the phrase set, and deleting a phrase that is in the cognate phrases and has word frequency that does not conform to a designated word frequency condition, the cognate phrases including phrases whose first n words are the same, and n being a natural number greater than or equal to 2.

In the phrase extraction apparatus provided in this embodiment, description information of a network resource is used as a corpus required for phrase extraction, and an explicit-phrase extraction procedure and a mode-phrase extraction procedure are performed on the description information, so that an explicit phrase that can be easily discovered and an implicit phrase that cannot be easily discovered can be extracted from the description information, more comprehensive phrase extraction can be achieved, and phrase quality can be ensured.

Further, in the phrase extraction apparatus provided in this embodiment, derivation is performed on the extracted explicit phrase and implicit phrase to obtain a derived phrase to further extract a new phrase (that is, a derived phrase), so that extracted phrases can be enriched, and the extracted phrases can be more comprehensive.

Furthermore, in the phrase extraction apparatus provided in this embodiment, a correction operation is performed on eventually extracted phrases, so that the phrases can have regular forms, bad cases in the phrases can be removed, phrase quality can be ensured, and the usability of a word library can be improved eventually.

It may be clearly understood by those skilled in the art that, for the purpose of convenient and brief description, for a detailed working process of the foregoing system, apparatus, and unit, reference can be made to a corresponding process in the foregoing method embodiments, and details are not described here again.

In the several embodiments provided in the present application, it should be understood that the disclosed system, apparatus, and method can be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts shown as units may or may not be physical units, may be located in one position, or may be distributed on a plurality of network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in the form of hardware or a software functional unit in addition to hardware.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present application. The foregoing storage medium includes: any medium that can store program codes, such as a USB flash drive, a mobile hard disk, a Read-Only Memory (ROM), a Random Access Memory (RAM), a magnetic disk, or an optical disc.

Finally, it should be noted that the foregoing embodiments are merely intended for describing the technical solutions of the present application rather than limiting the present application. Although the present application is described in detail with reference to the foregoing embodiments, those of ordinary skill in the art should understand that they may still make modifications to the technical solutions described in the foregoing embodiments or make equivalent replacements to some technical features thereof. These modifications or replacements will not make essences of the corresponding technical solutions depart from the spirit and scope of the technical solutions in the embodiments of the present application.

## Claims

1. A phrase extraction method, comprising:
acquiring description information of a network resource;
performing an explicit-phrase extraction procedure on the description information to extract an explicit phrase from the description information; and
performing a mode-phrase extraction procedure on the description information to extract an implicit phrase from the description information.

2. The method according to claim 1, wherein the step of performing an explicit-phrase extraction procedure on the description information to extract an explicit phrase from the description information comprises:
loading a preset explicit phrase rule; and
extracting an information segment that conforms to the explicit phrase rule from the description information and using the information segment as the explicit phrase.

3. The method according to claim 2, wherein the step of extracting an information segment that conforms to the explicit phrase rule from the description information and using the information segment as the explicit phrase comprises at least one operation in the following:
extracting a character string that conforms to a designated character-string condition from the description information and using the character string as the explicit phrase;
extracting a phrase that is in a field dictionary from the description information and using the phrase as the explicit phrase; and
extracting, when the description information comprises attribute information of the network resource, an attribute value in the attribute information, and using the attribute value as the explicit phrase.

4. The method according to claim 3, wherein the designated character-string condition comprises at least one of the following:
the character string is connected by a hyphen "-;"
the number of times that the character string appears is greater than a preset number-of-times threshold;
the character string is not an English word;
the last word of the character string does not end with "s," "es," "ex," "ed," "d," "ing," "ings," "ry," "ies," "ves," "y" or "a;"
the character string does not comprise a conjunction;
the character string does not comprise a stop word;
the character string comprises a designated quantity of words;
the character string does not comprise a number;
the length of a word in the character string is less than a designated length;
the length of the character string is greater than the quantity of words comprised in the character string; and
the character string does not conform to a designated regular rule.

5. The method according to claim 1, wherein the step of performing a mode-phrase extraction procedure on the description information to extract an implicit phrase from the description information comprises:
loading a preset mode combination rule; and
extracting an information segment that conforms to the mode combination rule from the description information and using the information segment as the implicit phrase.

6. The method according to claim 5, wherein the step of extracting an information segment that conforms to the mode combination rule from the description information and using the information segment as the implicit phrase comprises at least one operation in the following:
extracting a word combination that conforms to a designated part-of-speech combination condition from the description information and using the word combination as the implicit phrase;
extracting a word combination that conforms to a designated regular expression from the description information and using the word combination as the implicit phrase; and
generating, when the description information comprises attribute information of the network resource, the implicit phrase based on a preset generation rule and according to the attribute information.

7. The method according to claim 6, wherein the step of generating the implicit phrase based on a preset generation rule and according to the attribute information comprises:
generating a presented attribute name according to an attribute name in the attribute information, and combining an attribute value in the attribute information with the presented attribute name to generate the implicit phrase.

8. The method according to any of claims 1 to 7, after the explicit phrase and the implicit phrase are extracted, further comprising:
performing derivation on the explicit phrase and the implicit phrase to obtain a derived phrase.

9. The method according to claim 8, wherein the step of performing derivation on the explicit phrase and the implicit phrase to obtain a derived phrase comprises:
collecting statistics of an Inverse Document Frequency (IDF) value of a noun in the explicit phrase or the implicit phrase; and
deleting a noun whose IDF value is lower than a preset threshold from the explicit phrase or the implicit phrase, to obtain a phrase segment; and
determining the phrase segment as the derived phrase if the phrase segment conforms to a phrase condition.

10. The method according to claim 8, further comprising:
combining the explicit phrase, the implicit phrase, and the derived phrase to form a phrase set; and
performing at least one correction operation in the following on the phrase set:
determining a phrase that is in the phrase set and comprises a plural noun, and changing the plural noun in the phrase back to a singular noun;
determining a phrase that is in the phrase set and comprises a stop word, and replacing, if a remaining part obtained after the stop word is removed from the phrase conforms to a phrase condition, the phrase with the remaining part; and
determining cognate phrases in the phrase set, and deleting a phrase that is in the cognate phrases and has word frequency that does not conform to a designated word frequency condition, the cognate phrases comprising phrases whose first n words are the same, and n being a natural number greater than or equal to 2.

11. A phrase extraction apparatus, comprising:
an acquisition module configured to acquire description information of a network resource;
a first extraction module configured to perform an explicit-phrase extraction procedure on the description information to extract an explicit phrase from the description information; and
a second extraction module configured to perform a mode-phrase extraction procedure on the description information to extract an implicit phrase from the description information.

12. The apparatus according to claim 11, wherein the first extraction module is specifically configured to:
load a preset explicit phrase rule; and
extract an information segment that conforms to the explicit phrase rule from the description information and use the information segment as the explicit phrase.

13. The apparatus according to claim 12, wherein the first extraction module is specifically configured to perform at least one operation in the following:
extracting a character string that conforms to a designated character-string condition from the description information and using the character string as the explicit phrase;
extracting a phrase that is in a field dictionary from the description information and using the phrase as the explicit phrase; and
extracting, when the description information comprises attribute information of the network resource, an attribute value in the attribute information, and using the attribute value as the explicit phrase.

14. The apparatus according to claim 13, wherein the designated character-string condition comprises at least one of the following:
the character string is connected by a hyphen "-;"
the number of times that the character string appears is greater than a preset number-of-times threshold;
the character string is not an English word;
the last word of the character string does not end with "s," "es," "ex," "ed," "d," "ing," "ings," "ry," "ies," "ves," "y" or "a;"
the character string does not comprise a conjunction;
the character string does not comprise a stop word;
the character string comprises a designated quantity of words;
the character string does not comprise a number;
the length of a word in the character string is less than a designated length;
the length of the character string is greater than the quantity of words comprised in the character string; and
the character string does not conform to a designated regular rule.

15. The apparatus according to claim 11, wherein the second extraction module is specifically configured to:
load a preset mode combination rule; and
extract an information segment that conforms to the mode combination rule from the description information and use the information segment as the implicit phrase.

16. The apparatus according to claim 15, wherein the second extraction module is specifically configured to perform at least one operation in the following:
extracting a word combination that conforms to a designated part-of-speech combination condition from the description information and using the word combination as the implicit phrase;
extracting a word combination that conforms to a designated regular expression from the description information and using the word combination as the implicit phrase; and
generating, when the description information comprises attribute information of the network resource, the implicit phrase based on a preset generation rule and according to the attribute information.

17. The apparatus according to claim 16, wherein the second extraction module is specifically configured to:
generate a presented attribute name according to an attribute name in the attribute information, and combine an attribute value in the attribute information with the presented attribute name to generate the implicit phrase.

18. The apparatus according to any of claims 11 to 17, further comprising:
a derivation module configured to perform derivation on the explicit phrase and the implicit phrase, to obtain a derived phrase.

19. The apparatus according to claim 18, wherein the derivation module is specifically configured to:
collect statistics of an Inverse Document Frequency (IDF) value of a noun in the explicit phrase or the implicit phrase; and
delete a noun whose IDF value is lower than a preset threshold from the explicit phrase or the implicit phrase, to obtain a phrase segment; and
determine the phrase segment as the derived phrase if the phrase segment conforms to a phrase condition.

20. The apparatus according to claim 18, further comprising:
a correction module configured to combine the explicit phrase, the implicit phrase, and the derived phrase to form a phrase set, and perform at least one correction operation in the following on the phrase set:
determining a phrase that is in the phrase set and comprises a plural noun, and changing the plural noun in the phrase back to a singular noun;
determining a phrase that is in the phrase set and comprises a stop word, and replacing, if a remaining part obtained after the stop word is removed from the phrase conforms to a phrase condition, the phrase with the remaining part; and
determining cognate phrases in the phrase set, and deleting a phrase that is in the cognate phrases and has word frequency that does not conform to a designated word frequency condition, the cognate phrases comprising phrases whose first n words are the same, and n being a natural number greater than or equal to 2.
